(19) Europäisches Patentamt
European Patent Office
Office européen des brevets

(11) **EP 3 655 752 B1**

(12) **EUROPÄISCHE PATENTSCHRIFT**

(45) Veröffentlichungstag und Bekanntmachung des Hinweises auf die Patenterteilung:
**18.03.2026   Patentblatt 2026/12**

(21) Anmeldenummer: **18733245.7**

(22) Anmeldetag: **20.06.2018**

(51) Internationale Patentklassifikation (IPC):
***G01N 11/16*** *(2006.01)*

(52) Gemeinsame Patentklassifikation (CPC):
**G01N 11/16;** G01F 1/8477; G01F 1/8495

(86) Internationale Anmeldenummer:
**PCT/EP2018/066460**

(87) Internationale Veröffentlichungsnummer:
**WO 2019/015913 (24.01.2019 Gazette 2019/04)**

(54) **VORRICHTUNG ZUR MESSUNG VON VISKOSITÄTEN**

APPARATUS FOR MEASURING VISCOSITIES

DISPOSITIF DE MESURE DE VISCOSITÉS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.07.2017   DE 102017116515**

(43) Veröffentlichungstag der Anmeldung:
**27.05.2020   Patentblatt 2020/22**

(73) Patentinhaber: **Endress+Hauser Flowtec AG
4153 Reinach (CH)**

(72) Erfinder:
• **ANKLIN, Martin Josef
4143 Dornach (CH)**
• **HUBER, Christof
3007 Bern (CH)**

(74) Vertreter: **Endress + Hauser Group Services (Deutschland) AG+Co. KG
Colmarer Straße 6
79576 Weil am Rhein (DE)**

(56) Entgegenhaltungen:
WO-A1-2006/104485      DE-A1- 102004 021 690
US-A1- 2004 255 648      US-A1- 2008 184 813

**Beschreibung**

Die Erfindung betrifft eine Vorrichtung nach Anspruch 1 und ein Verfahren nach Anspruch 8.

Vorrichtungen zur Messung von Viskositäten von Fluiden werden z.B. in der industriellen Messtechnik eingesetzt.

So sind z.B. in der EP 1 158 289 B1 und der DE 10 2004 021 690 A1 Vorrichtungen zur Messung einer Viskosität eines Fluids beschrieben, bei denen ein Rohrabschnitt eines vom Fluid durchströmten Messrohrs zu Schwingungen einer Nutzschwingungsmode angeregt wird und die Viskosität des hindurch strömenden Fluids anhand der von der Viskosität abhängigen Dämpfung der resultierenden Schwingung bestimmt wird.

In der US 2008/0184813 A1 ist ein Massendurchflussmessgerät beschrieben, das dazu ausgebildet ist eine Massendurchflussrate und eine Viskosität eines durch mindestens eine Leitung geführten Mediums zu messen, indem die Leitung mit einer ersten Frequenz zu Schwingungen einer ersten Biegeschwindigsmode angeregt wird, die Leitung mit einer zweiten Frequenz zu Schwingungen der ersten Biegeschwindigsmode angeregt wird, und die Massendurchflussrate und die Viskosität anhand einer bei der Anregung mit der ersten Frequenz gemessenen ersten Schwingungsantwort und einer bei der Anregung mit der zweiten Frequenz gemessenen zweiten Schwingungsantwort der Leitung bestimmt werden. Des Weiteren ist in der US 2008/0184813 A1 beschrieben, dass in der Leitung auftretende Scherraten anhand der Massendurchflussrate und einer natürlichen Resonanzfrequenz des Massendurchflussgeräts bestimmbar sind, und durch Änderungen der Massendurchflussrate und/oder der Schwingungsmode veränderbar sind.

Darüber hinaus ist in der DE 10 2004 021 690 A1 ein Coriolis- Massendurchflussmessgerät beschrieben, das für den Einsatz in Anwendungen ausgelegt ist, bei denen Messgrößen inhomogener Fluide, z.B. zwei- oder mehrphasiger Fluide, bestimmt werden sollen. Hierzu ist in der DE 10 2004 021 690 A1 ein Verfahren beschrieben, bei dem ein gerades Messrohr zeitgleich oder zeitnah nacheinander zu Lateral- und zu Torsionschwingungen unterschiedlicher Frequenz angeregt wird und die im Wesentlichen nur von der Viskosität des Fluids abhängige Dämpfung der resultierenden Lateralschwingung und die von der Viskosität und der Inhomogenität des Fluids abhängige Dämpfung der resultierenden Torsionsschwingung gemessen wird. Aus den beiden gemessenen Dämpfungen werden Zwischenwerte abgeleitet, die dann zur Verbesserung der Messgenauigkeit von mit dem Messgerät gemessenen Messgrößen, wie z.B. einem Massendurchfluss, einer Dichte oder einer Viskosität, herangezogen werden. Dieses Verfahren basiert darauf, dass die Viskosität des Fluids bei den beiden zur Bestimmung der Zwischenwerte angeregten Nutzschwingungsmoden identisch ist.

Mit diesem Verfahren können Inhomogenitäten festgestellt und berücksichtigt werden. Die unter anderem für das Strömungsverhalten und die Rheologie von Fluiden entscheidende Frage, ob es sich bei dem Fluid um eine newtonsche Flüssigkeit handelt, kann hierdurch jedoch nicht beantwortet werden. Genauso kann auch eine ggfs. vorhandene Scherratenabhängigkeit der Viskosität eines Fluids mit dem in der DE 10 2004 021 690 A1 beschriebenen Messgerät weder qualitativ erkannt noch quantitativ bestimmt werden.

Es ist eine Aufgabe der Erfindung eine Vorrichtung, sowie ein Verfahren anzugeben, mit der bzw. mit dem scherratenabhängige Viskositäten von Fluiden bestimmt werden können.

Hierzu umfasst die Erfindung eine Vorrichtung zur Messung von Viskositäten von Fluiden gemäß Anspruch 1.

Eine erste Weiterbildung zeichnet sich dadurch aus, dass die Auswerteeinrichtung derart ausgebildet ist, dass sie anhand von mindestens zwei bei verschiedenen Scherratenwerten bestimmten Viskositätsmesswerten

- ein die Viskosität des Fluids als Funktion der Scherrate wiedergebendes Viskositätsprofil erstellt,
- erkennt, ob die Viskosität des Fluids eine Scherratenabhängigkeit aufweist, und/oder
- anhand der bei den unterschiedlichen Scherratenwerten bestimmten Viskositätsmesswerte bestimmt, ob das Fluid ein newtonsches Fluid ist, dessen Viskosität im Wesentlichen unabhängig von der Scherrate ist, oder ein scherverdünnendes Fluid ist, dessen Viskosität mit zunehmender Scherrate abfällt, oder ein scherverdickendes Fluid ist, dessen Viskosität mit zunehmender Scherrate ansteigt.

Gemäß einer zweiten Weiterbildung umfasst die Vorrichtung eine Detektionseinrichtung zur Detektion von während des Messbetriebs auftretenden Veränderungen des Fluids und/oder Abweichungen der Viskosität des Fluids von hierfür geltenden Vorgaben, die derart ausgebildet ist, dass

- sie die bei den gemessenen Scherratenwerten bestimmten Viskositätsmesswerte oder anhand des Viskositätsprofils bestimmte Viskositätsmesswerte mit Referenzwerten, insb. in einem Speicher abgelegten vorgegebenen Sollwerten oder vorgegebenen Sollwertbereichen und/oder in einem Speicher abgelegten zu einem oder mehreren früheren Zeitpunkten bei von der Vorrichtung bestimmten Scherratenwerten bestimmten Viskositätsmesswerten, vergleicht, und
- eine Veränderung und/oder Abweichung detektiert, wenn mindestens einer der Viskositätsmesswerte vom zugehörigen Referenzwert um mehr als eine vorgegebene Toleranz, insb. eine in Abhängigkeit von der Messgenauigkeit der Viskositätsmessung vorgegebene Toleranz oder eine vom Benutzer vorgegebene Toleranz, abweicht.

Eine erste Ausgestaltung zeichnet sich dadurch aus, dass

- die Erregereinrichtung eine Regeleinrichtung umfasst, die die Amplituden der bei der Anregung der einzelnen Nutzschwingungsmoden resultierenden Schwingungen jeweils auf einen konstanten Wert regelt, und
- die Messeinrichtung derart ausgebildet ist, dass sie die Dämpfungen jeweils anhand eines mittels einer Energiebedarfsmesseinrichtung ermittelten Maßes für einen bei der Anregung der jeweiligen Nutzschwingungsmode zur Aufrechterhaltung der resultierenden Schwingungen konstanter Amplitude erforderlichen Energiebedarfs bestimmt.

Eine dritte Weiterbildung zeichnet sich dadurch aus, dass die Kalibrationsdaten für jede Nutzschwingungsmode in einem vorgeschalteten Kalibrationsverfahren ermittelte Daten umfassen, über die den im Messbetrieb bei der Anregung der Nutzschwingungsmode gemessenen Dämpfungen ein Viskositätsmesswert zugeordnet ist und den gemessenen Frequenzen jeweils ein Scherratenwert zugeordnet ist, der im Wesentlichen gleich einem $2\,\pi$-fachen der Frequenz der resultierenden Schwingung des jeweiligen Rohrabschnitts ist.

Eine zweite Ausgestaltung zeichnet sich dadurch aus, dass die Vorrichtung eine an die Messeinrichtung angeschlossene Messeinheit umfasst, die derart ausgestaltet ist, dass sie im Messbetrieb anhand der bei Anregung mindestens einer der Nutzschwingungsmoden resultierenden Schwingung einen Massendurchfluss und/oder eine Dichte des Fluids bestimmt.

Eine vierte Weiterbildung zeichnet sich dadurch aus, dass die Nutzschwingungsmoden Frequenzen von kleiner gleich 1600 Hz, insb. kleiner gleich 1000 kHz, insb. kleiner gleich 800 Hz, insb. von 100 Hz bis 800 Hz, aufweisen.

Des Weiteren umfasst die Erfindung ein Verfahren zur Messung von Viskositäten gemäß Anspruch 8.

Eine erste Weiterbildung des Verfahrens zeichnet sich dadurch aus, dass die Nutzschwingungsmoden Frequenzen von kleiner gleich 1600 Hz, insb. kleiner gleich 1000 kHz, insb. kleiner gleich 800 Hz, insb. von 100 Hz bis 800 Hz, aufweisen.

Eine weitere Weiterbildung des Verfahrens zeichnet sich dadurch aus, dass

- in dem Kalibrationverfahren für jede der einzelnen Nutzschwingungsmoden Referenzmessungen ausgeführt werden, bei denen jeweils die jeweilige Nutzschwingungsmode angeregt wird während der entsprechende Rohrabschnitt mit dem ein Referenzfluid befüllt und/oder von dem Referenzfluid durchströmt ist und die Dämpfung und die Frequenz der bei der Anregung der jeweiligen Nutzschwingungsmode resultierenden Schwingung gemessen werden,
- wobei die Referenzmessungen mit newtonschen Referenzfluiden verschiedener bekannter dynamischer Viskosität ausgeführte Referenzmessungen umfassen, und
- wobei den gemessenen Frequenzen jeweils ein Scherratenwert zugeordnet wird, der im Wesentlichen gleich einem $2\,\pi$-fachen der Frequenz der resultierenden Schwingung des jeweiligen Rohrabschnitts ist und/oder die Referenzmessungen mit nicht-newtonschen Referenzfluiden mit in bekannter Weise von der Scherrate abhängiger Viskosität ausgeführte Referenzmessungen umfassen,
- wobei die Referenzmessungen insb. mit Referenzfluiden mit im Verhältnis zu deren viskosen Eigenschaften unterschiedlich stark ausgeprägten elastischen Eigenschaften ausgeführte Referenzmessungen umfassen, und
- für jede Nutzschwingungsmode Kalibrationsdaten bestimmt werden, über die den im Messbetrieb bei der Anregung der jeweiligen Nutzschwingungsmode gemessenen Dämpfungen und Frequenzen ein Scherratenwert und ein Viskositätsmesswert zugeordnet ist.

Eine weitere Weiterbildung des Verfahrens zeichnet sich dadurch aus, dass anhand von mindestens zwei bei verschiedenen Scherratenwerten bestimmten Viskositätsmesswerten

- ein die Viskosität des Fluids als Funktion der Scherrate wiedergebendes Viskositätsprofil erstellt wird,
- erkannt wird, ob die Viskosität des Fluids eine Scherratenabhängigkeit aufweist, und/oder
- anhand der bei den Scherratenwerten bestimmten Viskositätsmesswerten bestimmt wird, ob das Fluid ein newtonsches Fluid, ein scherverdünnendes Fluid oder ein scherverdickendes Fluid ist.

Eine weitere Weiterbildung des Verfahrens zeichnet sich dadurch aus, dass während des Messbetriebs auftretende Veränderungen des Fluids und/oder Abweichungen der Viskosität des Fluids von hierfür geltenden Vorgaben detektiert werden, indem

- die bei den gemessenen Scherratenwerten bestimmten Viskositätsmesswerte mit Referenzwerten, insb. mit vorgegebenen Sollwerten, mit vorgegebenen Sollwertbereichen oder mit zu einem oder mehreren früheren Zeitpunkten bei gemessenen Scherratenwerten bestimmten Viskositätsmesswerten, verglichen werden, und

- eine Veränderung und/oder Abweichung detektiert wird, wenn mindestens einer der Viskositätsmesswerte vom zugehörigen Referenzwert um mehr als eine vorgegebene Toleranz, insb. eine in Abhängigkeit von der Messgenauigkeit der Viskositätsmessung vorgegebene Toleranz oder eine vom Benutzer vorgegebene Toleranz, abweicht.

Die Erfindung und weitere Vorteile werden nun anhand der Figuren der Zeichnung, in denen ein Ausführungsbeispiel dargestellt ist, näher erläutert; gleiche Teile sind in den Figuren mit gleichen Bezugszeichen versehen.

Fig. 1 zeigt: eine erfindungsgemäße Vorrichtung;

Fig. 2 zeigt: exemplarisch drei jeweils einer Eigenschwingungsmode eines geraden Rohrabschnitts entsprechende Nutzschwingungsmoden;

Fig. 3 zeigt: ein Ausführungsbeispiel eines Messsystems;

Fig. 4 zeigt: ein Messsystem mit vier Messrohren mit gekrümmten Rohrabschnitten; und

Fig. 5 zeigt: ein Messsystem mit vier Messrohren mit geraden Rohrabschnitten.

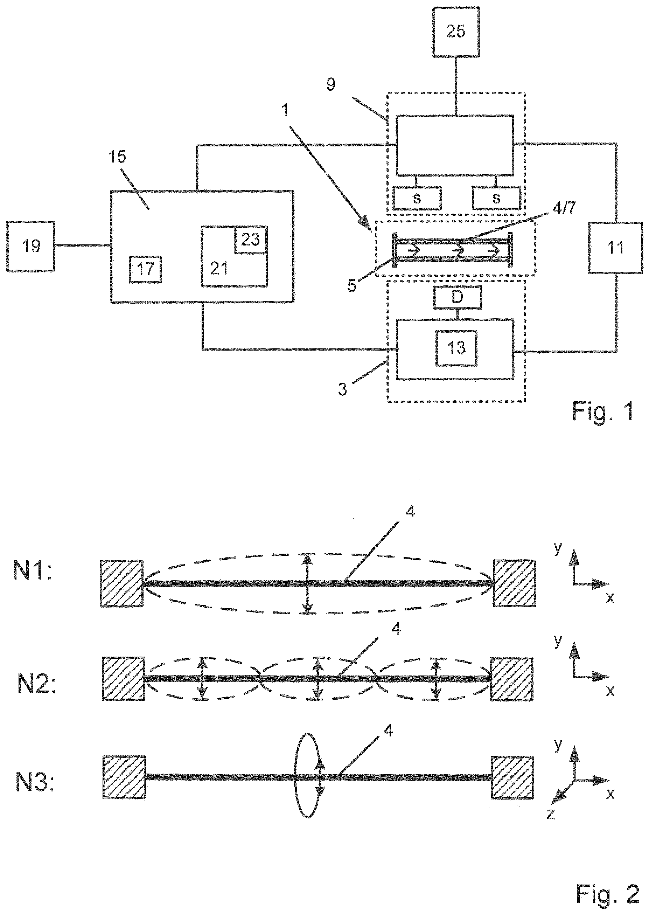

Fig. 1 zeigt eine erfindungsgemäße Vorrichtung zur Messung von Viskositäten von Fluiden. Die Vorrichtung umfasst ein in Fig. 1 lediglich als Funktionsblock dargestelltes Messsystem 1, welches mindestens ein im Messbetrieb mit einem Fluid befülltes oder von dem Fluid durchströmtes Messrohr umfasst, das mindestens einen zu Schwingungen anregbaren Rohrabschnitt aufweist.

Des Weiteren umfasst die Vorrichtungen eine Erregereinrichtung 3 zur Anregung von mindestens zwei Nutzschwingungsmoden unterschiedlicher Frequenz, bei denen jeweils mindestens einer der Rohrabschnitte zu Schwingungen, insb. zu Resonanzschwingungen, der jeweiligen Nutzschwingungsmode angeregt wird. Hierzu ist die Erregereinrichtung 3 derart ausgebildet, dass durch sie im Messbetrieb mindestens einer der vorgesehenen Rohrabschnitte zu Schwingungen einer ersten Nutzschwingungsmode anregbar ist und mindestens einer der vorgesehenen Rohrabschnitte zu Schwingungen mindestens einer weiteren Nutzschwingungsmode anregbar ist. Die einzelnen Nutzschwingungsmoden entsprechen vorzugsweise Eigenschwingungsmoden des jeweiligen Rohrabschnitts. Dabei hängt es von der Ausgestaltung der anzuregenden Rohrabschnitte und der Form der Nutzschwingungsmoden ab, ob die Anregung der einzelnen Nutzschwingungsmoden und die nachfolgend beschriebene Auswertung der dabei resultierenden Schwingungen für die einzelnen Nutzschwingungsmoden zeitgleich erfolgen kann oder zeitlich nacheinander ausgeführt werden muss.

Zur Ausführung des erfindungsgemäßen Messverfahrens genügt bereits ein Messsystem 1 mit nur einem einzigen Messrohr mit nur einem einzigen Rohrabschnitt, der zu Schwingungen einer ersten und mindestens einer weiteren, eine andere Frequenz aufweisenden Nutzschwingungsmode, angeregt werden kann. Ein Beispiel hierfür sind Messsysteme mit mindestens einem Messrohr, das z.B. mindestens einen zu Torsions- und/oder zu Biegeschwingungen anregbaren Rohrabschnitt umfasst.

Insoweit kann das Messsystem 1 z.B. einen geraden, an dessen gegenüberliegenden Enden fixierten Rohrabschnitt 4 umfassen. Ein solcher Rohrabschnitt 4 kann z.B. zu als Lateralschwingung ausgebildeten Eigenschwingungsmoden angeregt werden. Dabei wird der Rohrabschnitt 4 zu Schwingungen in einer durch dessen Längsachse x und eine senkrecht zu dessen Längsachse x verlaufende Achse y aufgespannten Schwingungsebene x-y angeregt, bei denen er senkrecht zu dessen Längsachse x gerichtete Auslenkungen erfährt. Diese Eigenschwingungsmoden umfassen eine in Fig. 2 als erste Nutzschwingungsmode N1 dargestellte Grundschwingungsmode, bei der die senkrecht zur Längsachse x auftretenden Auslenkungsamplituden einen einzigen Schwingungsbauch ausbilden. Darüber hinaus umfassen sie eine in Fig. 2 als zweite Nutzschwingungsmode N2 dargestellte nächsthöhere, symmetrische und dementsprechend drei Schwingungsbäuche ausbildendende Oberschwingung dieser Eigenschwingungsmode. Alternativ oder zusätzlich hierzu können gerade Rohrabschnitte 4 zu als Torsionsschwingungen um eine durch die beiden fixierten Enden des Rohrabschnitts 4 verlaufende Rotationsachse ausgebildeten Eigenschwingungen angeregt werden.

Fig. 2 zeigt als ein Beispiel hierzu eine als reine Torsionsschwingungsmode ausgebildete dritte Nutzschwingungsmode N3.

Alternativ kann auch ein Messsystem 1 eingesetzt werden, das mindestens einen eine andere Formgebung aufweisenden Rohrabschnitt umfasst. Beispiele hierfür sind Messsysteme 1, die mindestens ein Messrohr aufweisen, das einen gekrümmten, gebogenen, u-förmigen, v-förmigen und/oder mindestens einen $\Omega$ förmigen zu Schwingungen einer vorgegebenen Nutzschwingungsmode anregbaren Rohrabschnitt umfasst. Alternativ kann das Messsystem 1 aber auch zwei oder mehr strömungstechnisch parallel oder seriell zueinander geschalteten Messrohre umfassen, von denen mindestens eines einen oder mehrere seriell durchströmte, zu Schwingungen anregbare Rohrabschnitte aufweist, wobei diese Rohrabschnitte auch hier jeweils z.B. eine der o.g. Formgebungen aufweisen können.

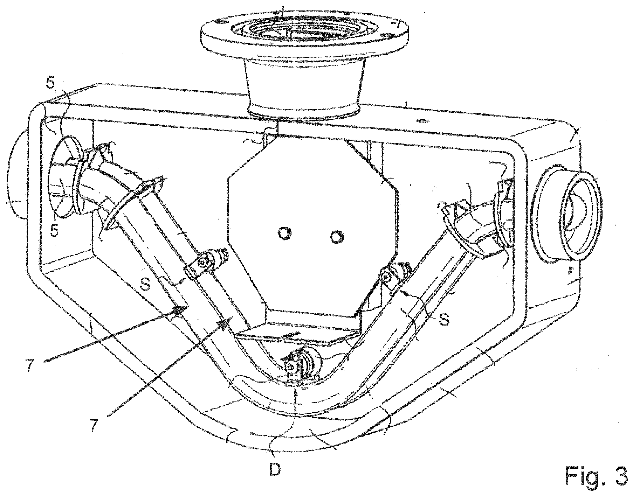

Fig. 3 zeigt als ein Ausführungsbeispiel ein Messsystem 1, das zwei im Wesentlichen parallel zueinander verlaufende Messrohre 5 umfasst, die jeweils einen an dessen gegenüberliegenden Enden mechanisch fest eingespannten, in dem dargestellten Ausführungsbeispiel gekrümmten, zu Schwingungen anregbaren Rohrabschnitt 7 aufweisen. Bei diesem Ausführungsbeispiel umfassen die Nutzschwingungsmoden vorzugsweise Eigenschwingungsmoden der Rohrabschnitte 7, wie z.B. eine Grundmode und eine höhere Mode von kombinierten Torsions-Biege-Schwingungen, bei denen die Rohrabschnitte 7 zu Schwingungen um eine durch deren eingespannten Enden verlaufende Torsionsachse angeregt werden.

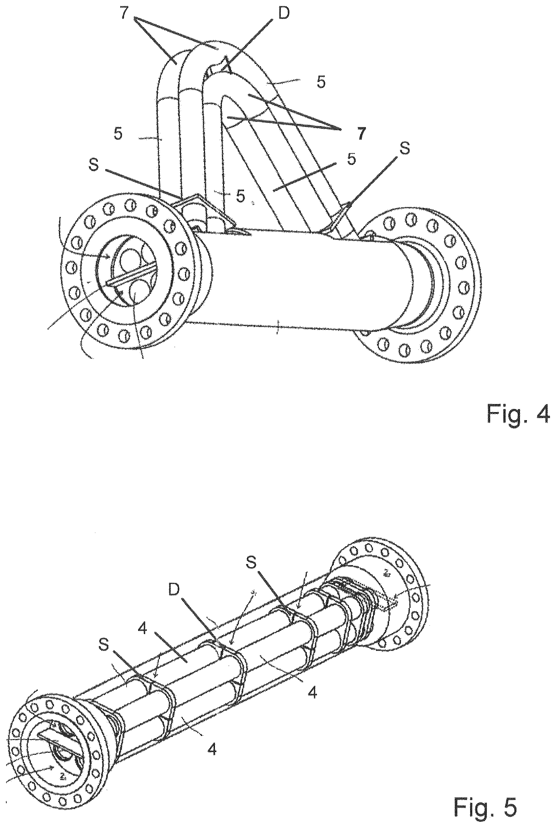

Fig. 4 zeigt als weiteres Ausführungsbeispiel ein Messsystem 1, das vier in Strömungsrichtung parallel zueinander geschaltete Messrohre 5 umfasst, die jeweils einen an dessen gegenüberliegenden Enden mechanisch fest eingespannten, gekrümmten, zu Schwingungen anregbaren Rohrabschnitt 7 aufweisen. Fig. 5 zeigt als weiteres Ausführungsbeispiel ein Messsystem 1, das vier in Strömungsrichtung parallel zueinander geschaltete Messrohre umfasst, die jeweils mindestens einen an dessen gegenüberliegenden Enden mechanisch fest eingespannten, geraden, zu Schwingungen anregbaren Rohrabschnitt 4 aufweisen. Die in Fig. 4 und 5 dargestellten Messsysteme 1 werden vorzugsweise derart betrieben, dass je zwei der vier Messrohre ein Messrohrpaar bilden, dessen parallel zueinander angeordneten Rohrabschnitte 4 bzw. 7 jeweils zu Schwingungen, vorzugsweise zu gegenphasigen Schwingungen, mindestens einer der zuvor in Verbindung mit Fig. 2 für gerade Rohrabschnitte 4 bzw. in Verbindung mit Fig. 3 für gekrümmte Rohrabschnitte 7 beschriebenen Nutzschwingungsmoden angeregt werden. Dabei wird vorzugsweise derart Verfahren und/oder es werden die Rohrabschnitte 4 bzw. 7 vorzugsweise derart ausgelegt, dass die Frequenzen der Nutzschwingungsmoden der Rohrabschnitte 4 bzw. 7 der beiden Messrohrpaare verschieden sind.

Die Anregung der einzelnen Nutzschwingungsmoden der zu Schwingungen anregbaren Rohrabschnitte 4, 7 des jeweiligen Messsystems 1 erfolgt vorzugsweise über einen oder mehrere jeweils auf einen entsprechend der anzuregenden Nutzschwingungsmode ausgewählten Bereich des jeweiligen Rohrabschnitts 4, 7 einwirkenden Antrieb D der Erregereinrichtung 3. Hierzu eignen sich insb. heute üblicher Weise in Coriolis-Massendurchfluss-Messgeräten oder Dichtemessgeräten zur Anregung von Nutzschwingungsmoden eingesetzte Antriebe, wie z.B. elektrostatische, piezoelektrische oder magnetische Antriebe D. Entsprechende Antriebe D, sowie deren zur Anregung von Nutzschwingungsmoden erforderliche Anzahl und Anordnung sind dem Fachmann bekannt und daher hier nicht im Detail beschrieben. Die Erregereinrichtung 3 umfasst in dem in Fig. 1 und 3 dargestellten Ausführungsbeispiel einen auf die Mitte der in Fig. 3 bogenförmigen Rohrabschnitte 7 einwirkenden Antrieb D, der vorzugsweise derart ausgebildet ist, dass er die parallelen Rohrabschnitte 7 zu gegenphasigen Schwingungen anregt.

Zusätzlich umfasst die Vorrichtung eine Messeinrichtung 9, die derart ausgebildet ist, dass sie für die einzelnen im Messbetrieb angeregten Nutzschwingungsmoden jeweils eine Frequenz und eine Dämpfung der resultierenden Schwingung mindestens eines zu Schwingungen der jeweiligen Nutzschwingungsmode angeregten Rohrabschnitts 4, 7 bestimmt. Wie nachfolgend im Detail erläutert gibt es Ausgestaltungen erfindungsgemäßer Vorrichtungen, bei denen es erforderlich ist zusätzlich zu den Frequenzen der resultierenden Schwingungen auch deren Amplitude zu erfassen. In dem Fall ist die Messeinrichtung 9 derart ausgebildet, dass sie Frequenz, Amplitude und Dämpfung der resultierenden Schwingungen bestimmt.

Im Messbetrieb führt die Vorrichtung in jedem Messzyklus zu mindestens zwei Nutzschwingungsmoden unterschiedlicher Frequenz Messungen aus, bei denen jeweils mindestens ein Rohrabschnitt 4,7 zu Schwingungen der jeweiligen Nutzschwingungsmode angeregt wird. Während der Anregung der jeweiligen Nutzschwingungsmode wird die resultierende Schwingung des hierzu angeregten Rohrabschnitts 4 bzw. der hierzu angeregten Rohrabschnitte 4, 7 jeweils vorzugsweise mittels mindestens eines Sensors S der Messeinrichtung 9 messtechnisch erfasst. Hierzu verwendbare Sensoren S, z.B. elektrostatische, piezoelektrische oder magnetische Sensoren, sowie deren zur Erfassung der resultierenden Schwingungen erforderliche Anzahl und Anordnung in Relation zu dem jeweiligen Rohrabschnitt 4, 7 sind aus dem Stand der Technik bekannt und daher hier nicht im Detail beschrieben. Die Sensoren S können z.B. auf die gleiche Weise ausgebildet und/oder angeordnet werden, wie bei aus dem Stand der Technik bekannten Coriolis-Massendurchflussmesseinrichtungen oder Dichtemesseinrichtungen. Bei dem in Fig. 1und 3 dargestellten Ausführungsbeispiel umfasst die Messeinrichtung 9 zwei einlass- und auslassseitig im Bereich der Schenkel der in Fig. 3 bogenförmigen Rohrabschnitte 7 angeordnete Sensoren S zur messtechnischen Erfassung von deren resultierenden Schwingungen.

Zur Bestimmung der von der Viskosität des den jeweiligen Rohrabschnitt 4, 7 füllenden bzw. durch diesen hindurchströmenden Fluids abhängigen Dämpfung der bei der Anregung der jeweiligen Nutzschwingungsmode resultierenden Schwingung kann die Vorrichtung, insb. deren Messeinrichtung 9, z.B. derart ausgebildet sein, dass sie die Dämpfung jeweils auf die in der US 2004/0255648 A1 beschriebene Weise anhand der Schwingungsgüte des jeweiligen Rohrabschnitts 4, 7 bestimmt, die z.B. aus der Breite des Resonanzpeaks der jeweiligen Nutzschwingungsmode abgeleitet werden kann.

Alternativ kann sie derart ausgebildet sein, dass sie die Dämpfung jeweils auf eine z.B. in der EP 1 158 289 B1 oder in der DE 10 2004 021 690 A1 in Verbindung mit Massendurchflussmessgeräten beschriebene Weise anhand der zur Aufrechterhaltung der jeweiligen Nutzschwingungsmode benötigten Energie ermittelt. Diese Ausführungsform ist in Fig. 1 dargestellt. Dort wird die Erregereinrichtung 3 über eine an die Messeinrichtung 9 und die Erregereinrichtung 3 angeschlossene Regeleinrichtung 11 vorzugsweise derart angesteuert, dass sie die mittels der Sensoren S gemessenen Amplituden der bei der Anregung der jeweiligen Nutzschwingungsmode resultierenden Schwingung des jeweiligen Rohrabschnitts 4, 7 jeweils auf einen konstanten Wert regelt. Der dabei zur Aufrechterhaltung der resultierenden Schwingung konstanter Amplitude erforderliche Energiebedarf ist abhängig von der Dämpfung, die wiederum von der Viskosität des Fluids abhängig ist. Entsprechend wird mittels einer entsprechend ausgebildeten Energiebedarfsmesseinrichtung 13 ein Maß für die hierfür erforderliche Energie bestimmt, das der viskositätsabhängigen Dämpfung entspricht.

Die Anregung der Nutzschwingungsmoden erfolgt vorzugsweise jeweils bei einer der Resonanzfrequenz der jeweiligen Nutzschwingungsmode entsprechenden Frequenz. Die Anregung der Resonanzfrequenz erfolgt z. B. auf aus dem Stand der Technik bekannte Weise. Hierzu ist die Vorrichtung vorzugsweise derart ausgebildet, dass sie die mittels der Sensoren S gemessene Amplitude der resultierenden Schwingung durch eine entsprechende Regelung der Antriebsfrequenz maximiert und/oder eine Phasenverschiebung zwischen Anregung und resultierender Schwingung durch eine entsprechende Regelung der Antriebsfrequenz auf einen der Resonanz entsprechenden Wert regelt.

Erfindungsgemäß umfasst die Vorrichtung eine Auswerteeinrichtung 15, die derart ausgebildet ist, dass sie anhand von in einem Speicher 17 abgelegten Kalibrationsdaten für die einzelnen im Messbetrieb angeregten Nutzschwingungsmoden jeweils anhand der Frequenz und der Dämpfung, sowie erforderlichenfalls auch der Amplitude, der bei der Anregung der jeweiligen Nutzschwingungsmode resultierenden Schwingung des jeweiligen Rohrabschnitts 4, 7 einen Scherratenwert und einen Viskositätsmesswert bestimmt. Dabei werden die Scherratenwerte und die Viskositätsmesswerte anhand der Kalibrationsdaten derart bestimmt, dass die Viskositätsmesswerte der dynamischen Viskosität des Fluids bei einer dem zugehörigen Scherratenwert entsprechenden statischen Scherrate entsprechen.

Die Anregung der jeweiligen Nutzschwingungsmode bewirkt eine oszillatorische Bewegung des jeweils angeregten Rohrabschnitts 4, 7. Dabei bilden sich darin befindlichen bzw. im hindurchströmenden Fluid Scherwellen aus, die ausgehend von einer Rohrwand des jeweiligen Rohrabschnitts bis zu einer gewissen Eindringtiefe h in das Fluid eindringen. Die Eindringtiefe h ist regelmäßig abhängig von der Frequenz der resultierenden Schwingung, sowie von der dynamischen Viskosität und der Dichte des Fluids und kann z.B. gemäß:

$$ h = \sqrt{\frac{\eta}{2\pi\rho f}} $$

abgeschätzt werden, wobei $\eta$ die dynamische Viskosität, f die Frequenz der resultierenden Schwingung und $\rho$ die Dichte des Fluids bezeichnen. Dabei steigt die von der Viskosität abhängige Dämpfung der bei der Anregung der jeweiligen Nutzschwingungsmode resultierenden Schwingung mit entsprechend der Viskosität ansteigender Eindringtiefe h an. Dementsprechend können mit erfindungsgemäßen Vorrichtungen Viskositäten gemessen werden, die in einem Wertebereich liegen, in dem sich die Eindringtiefe h in Abhängigkeit von der Viskosität verändert. Das ist solange der Fall, wie die Eindringtiefe h kleiner als ein Rohrradius des Rohrabschnitts 4, 7 ist. Die Rohrabschnitte 4, 7 der Messrohre 5 weisen regelmäßig Radien auf, die im Zentimeterbereich oder Dezimeterbereich liegen. Dementsprechend ist die Eindringtiefe h bei erfindungsgemäßen Vorrichtungen auch bei niedrigen Frequenzen, z.B. Frequenzen im Bereich von 100 Hz bis 1000 Hz, deutlich geringer als der Rohrradius des jeweiligen Rohrabschnitts.

Bei erfindungsgemäßen Vorrichtungen werden die Abmessungen des oder der Rohrabschnitte 4, 7, sowie deren bei der Anregung der jeweiligen Nutzschwingungsmode ausgelenkten Längen oder Teillängen in Abhängigkeit von den viskosen oder den viskosen und elastischen Eigenschaften der Fluide, deren scherratenabhängige Viskosität gemessen werden soll, vorzugsweise jeweils derart bemessen, dass die Frequenzen und die Dämpfungen der bei der Anregung der einzelnen Nutzschwingungsmoden resultierenden Schwingungen jeweils keine oder nur eine geringe Abhängigkeit von der Amplitude der resultierenden Schwingung des jeweiligen Rohrabschnitts 4, 7 aufweisen. Das bietet den Vorteil, dass die Amplitude der resultierenden Schwingungen weder im Messbetrieb gemessen, noch bei der Bestimmung der Scherratenwerte und der Viskositätsmesswerte berücksichtigt zu werden braucht. Wo das nicht möglich ist, müssen die Amplituden der resultierenden Schwingungen mittels der Messeinrichtung 9 messtechnisch erfasst und bei der Bestimmung der Scherratenwerte und der Viskositätsmesswerte anhand von die bestehende Amplitudenabhängigkeit der Messungen wiedergebenden Kalibrationsdaten berücksichtigt werden.

Die Kalibrationsdaten werden vorzugsweise in einem vorgeschalteten Kalibrationsverfahren bestimmt. Gemäß einer ersten Variante werden hierzu für jede der einzelnen Nutzschwingungsmoden Referenzmessungen mit newtonschen Referenzfluiden verschiedener bekannter dynamischer Viskosität und mit nicht-newtonschen Referenzfluiden mit in bekannter Weise von der Scherrate abhängiger Viskosität ausgeführt werden. Bei diesen Referenzmessungen werden die einzelnen Nutzschwingungsmoden angeregt während der jeweilige Rohrabschnitt 4, 7 mit dem Referenzfluid befüllt ist bzw. während das Referenzfluid durch den jeweiligen Rohrabschnitt 4, 7 strömt. Dabei wird für jede der Nutzschwingungen die Frequenz und die Dämpfung, sowie erforderlichenfalls auch die Amplitude der resultierenden Schwingung mit der Messeinrichtung 9 gemessenen. Hieraus werden dann die Kalibrationsdaten abgeleitet und in dem der Auswerteinheit 15 zugeordneten Speicher 17 abgelegt.

Mit erfindungsgemäßen Vorrichtungen können dynamische Viskositäten von im Wesentlichen ausschließlich viskose Eigenschaften aufweisenden Fluiden, wie zum Beispiel Ölen, bestimmt werden. Bei diesen Fluiden stellt die gemessene Dämpfung ein direktes Maß für die dynamische Viskosität dar. Für diesen Anwendungszweck werden die Referenzmessungen vorzugsweise mit im Wesentlichen ausschließlich viskose Eigenschaften aufweisenden Referenzfluiden ausgeführt. Dabei ergeben die mit den newtonschen Referenzfluiden ausgeführten Referenzmessungen Kalibrationsdaten, die die Abhängigkeit der gemessenen Dämpfung von der dynamischen Viskosität des Fluids wiedergeben. Anhand dieser Kalibrationsdaten kann den im Messbetrieb gemessenen Dämpfungen der jeweilige zugehörige Viskositätsmesswert zugeordnet werden.

Darüber hinaus ergeben die mit den nicht-newtonschen Referenzfluiden ausgeführten Referenzmessungen Kalibrationsdaten, über die den gemessenen Frequenzen bzw. den gemessenen Frequenzen und Amplituden jeweils ein Scherratenwert zugeordnet werden kann, der der Scherrate entspricht, bei der das Referenzfluid die dem zugehörigen Viskositätsmesswert entsprechende dynamische Viskosität aufweist.

Darüber hinaus können mit erfindungsgemäßen Vorrichtungen auch dynamische Viskositäten von Fluiden bestimmt werden, die neben rein viskosen Eigenschaften zusätzlich auch elastische Eigenschaften aufweisen. Bei diesen Fluiden umfasst die Dämpfung sowohl einen von der dynamischen Viskosität abhängigen Anteil als auch einen auf durch die elastischen Eigenschaften des Fluids verursachte Energieverluste zurück zu führenden Anteil. Bei diesen Fluiden kann die Dämpfung auch bei newtonschen Fluiden unter Umständen von der Frequenz oder von der Frequenz und der Amplitude abhängig sein. Diese Abhängigkeit wird umso stärker sein, je größer der auf die elastischen Eigenschaften des Fluids zurückzuführende Anteil der Dämpfung ist. Umgekehrt kann bei diesen Fluiden auch der einem Viskositätsmesswert zuzuordnende Scherratenwert von der dynamischen Viskosität des Fluids und/oder vom Verhältnis der viskosen und der elastischen Eigenschaften des Fluids abhängen. Dem wird bei der Aufzeichnung der Kalibrationsdaten vorzugsweise dadurch Rechnung getragen, dass Referenzmessungen mit Referenzfluiden mit im Verhältnis zu deren viskosen Eigenschaften unterschiedlich stark ausgeprägten elastischen Eigenschaften ausgeführt werden. Hierüber lassen sich anhand der mit diesen Referenzfluiden ausgeführten Referenzmessungen die Abhängigkeiten der im Messbetrieb gemessenen Dämpfungen von der dynamischen Viskosität und der Frequenz bzw. der Frequenz und der Amplitude, sowie die Abhängigkeit der Scherratenwerte von der gemessenen Dämpfung und der Frequenz bzw. der Frequenz und der Amplitude in Abhängigkeit vom Verhältnis der viskosen und elastischen Eigenschaften der Referenzfluide ermitteln. Alternativ oder zusätzlich hierzu, umfassen die Kalibrationsdaten für diesen Anwendungszweck vorzugsweise Daten, die anhand von Referenzmessungen ermittelt wurden, die mit mindestens einem Referenzfluid ausgeführt wurden, das identisch zu dem Fluid ist, dessen scherratenabhängige Viskosität mit der erfindungsgemäßen Vorrichtung bestimmt werden soll, oder diesem insb. im Hinblick auf dessen visko-elastischen Eigenschaften möglichst ähnlich ist.

Bei erfindungsgemäßen Vorrichtungen, bei denen die Eindringtiefe h der Scherwelle deutlich kleiner, vorzugsweise mindestens um einen Faktor Zehn kleiner als der Rohrradius des jeweiligen Rohrabschnitts 4, 7 ist, kann näherungsweise angenommen werden, dass sich im Fluid Scherungen ausbilden, auf die zumindest näherungsweise die von W.P. Cox und E.H. Merz für Oszillationsviskosimeter aufgestellte Regel anwendbar ist. Diese Regel besagt, dass der Betrag einer mit einem für Oszillationsviskosimeter bei einer bestimmten Oszillationskreisfrequenz $\omega$ gemessene komplexen Viskosität $|\eta^*|$ eines Fluids dem Betrag der dynamischen Viskosität $|\eta|$ des Fluids bei einer der Oszillationskreisfrequenz $\omega$ entsprechenden statischen Scherrate $f_{stat}$ entspricht. Die in Oszillationsviskosimetern gemessene komplexe Viskosität $\eta^*$ setzt sich zusammen aus einem auf die elastischen Eigenschaften und einem auf die viskosen Eigenschaften des Fluids zurückzuführenden Beitrag.

Bei Anwendung dieser Regel auf erfindungsgemäße Vorrichtungen werden die mit erfindungsgemäßen Vorrichtungen gemessenen Dämpfungen jeweils als eine der in einem Oszillationsviskosimeter gemessenen komplexen Viskosität entsprechende Messgröße interpretiert und als ein Maß für die dynamische Viskosität des Fluids bei einer der Frequenz der resultierenden Schwingung entsprechenden statischen Scherrate herangezogen.

Insoweit ist die Auswerteeinrichtung 15 hier vorzugsweise derart ausgebildet, dass sie anhand der während der Anregung der jeweiligen Nutzschwingungsmode bestimmten Dämpfung der resultierenden Schwingung des jeweiligen Rohrabschnitts 4, 7 den Viskositätsmesswert und anhand der Frequenz der resultierenden Schwingung des jeweiligen Rohrabschnitts 4, 7 den zugehörigen Scherratenwert bestimmt.

Bei diesen Vorrichtungen wird vorzugsweise bereits bei der Ableitung der Kalibrationsdaten die von W.P. Cox und E.H. Merz für Oszillationsviskosimeter abgeleitete Regel auf die o.g. Weise herangezogen. In dem Fall umfassen die Kalibrationsdaten für jede Nutzschwingungsmode jeweils Daten, über die den während der Anregung der jeweiligen Nutzschwingungsmode bestimmten Dämpfungen der resultierenden Schwingung des jeweiligen Rohrabschnitts 4, 7 die zugehörigen Viskositätsmesswerte und den Frequenzen der resultierenden Schwingung des jeweiligen Rohrabschnitts 4, 7 die Scherratenwerte zugeordnet sind. Die Kalibrationsdaten können z.B. in einem deutlich vereinfachten Kalibrationsverfahren bestimmt werden, bei dem lediglich die Abhängigkeiten der Dämpfungen von den zugehörigen Viskositätsmesswerten bestimmt werden, und die Scherratenwerte im Wesentlichen gleich dem $2\pi$ - fachen der Frequenz der resultierenden Schwingungen gesetzt werden. Hierzu können z.B. ausschließlich Referenzmessungen mit newtonschen Referenzfluiden mit bekannter, scherratenunabhängiger Viskosität ausgeführt werden. Referenzmessungen mit Referenzfluiden mit in bekannter Weise von der Scherrate abhängiger Viskosität sind in dem Fall nicht erforderlich.

Über die Anwendung der Regel von W.P. Cox und E.H. Merz lassen sich für Fluide mit überwiegend viskosen Eigenschaften insb. dann akzeptable Messgenauigkeiten erzielen, wenn die Vorrichtung derart ausgebildet ist, dass die Dämpfungen und die Frequenzen der bei der Anregung der jeweiligen Nutzschwingungsmoden resultierenden Schwingungen im Wesentlichen unabhängig von der Amplitude der resultierenden Schwingungen sind.

Erfindungsgemäße Vorrichtungen werden über eine entsprechende Dimensionierung der Abmessungen der Rohrabschnitte, insb. deren Querschnittsflächen, deren Wandstärken und deren der Anregung der einzelnen Nutzschwingungsmoden ausgelenkten Längen bzw. Teillängen, vorzugsweise derart ausgelegt, dass die für die gemessenen Scherratenwerte maßgeblichen Frequenzen der Nutzschwingungsmoden einen Frequenzbereich abdecken, der es ermöglicht dynamische Viskositäten in einem Scherratenbereich zu messen, in dem Viskositäten von nicht-newtonschen Fluiden sich typischer Weise in Abhängigkeit von der Scherrate verändern.

Dieser Frequenzbereich kann über die o.g. Anwendung der Regel von W.P. Cox und E.H. Merz zumindest näherungsweise abgeschätzt werden. Um mit erfindungsgemäßen Vorrichtungen dynamische Viskositäten in einem Scherratenbereich von kleiner gleich 10000 1/s messen zu können, werden hierzu vorzugsweise Nutzschwingungsmoden angeregt, deren Frequenzen unterhalb von 1600 Hz liegen. Vorzugweise werden Nutzschwingungsmoden angeregt, deren Frequenzen kleiner gleich 1000 Hz, vorzugsweise sogar kleiner gleich 800 Hz sind. So können z.B. anhand von Nutzschwingungsmoden, deren Frequenzen in einem Frequenzbereich von 100 Hz bis 800 Hz liegen, dynamische Viskositäten in einem Scherratenbereich in der Größenordnung von 600 1/s bis 5000 1/s gemessen werden.

Erfindungsgemäße Vorrichtungen bieten den Vorteil, dass anhand der von ihnen bestimmten Viskositätsmesswerte festgestellt werden kann, ob das Fluid eine scherratenabhängige Viskosität aufweist. Darüber hinaus kann eine ggfs. vorhanden Scherratenabhängigkeit der Viskosität quantitativ bestimmt und/oder ausgewertet werden. Die damit verbundenen zusätzlichen Informationen können vom Betreiber der Vorrichtung anhand der Viskositätsmesswerte und der zugehörigen Scherratenwerte ermittelt werden. Alternativ können diese Informationen auch von der Vorrichtung bestimmt und über eine Ausgabeeinheit 19 zur Verfügung gestellt werden. Hierzu ist die Auswerteinheit 15 vorzugsweise derart ausgebildet, dass sie anhand der bei mindestens zwei bei verschiedenen gemessenen Scherratenwerten bestimmten Viskositätsmesswerte erkennt, ob das Fluid eine scherratenabhängige Viskosität aufweist. Hierzu genügt es bereits zu überprüfen, ob mindestens zwei bei unterschiedlichen gemessenen Scherratenwerten gemessene Viskositätsmesswerte um mehr als eine vorgegebene Mindestabweichung voneinander abweichen.

Alternativ oder zusätzlich hierzu ist die Auswerteinheit 15 vorzugsweise derart ausgebildet, dass sie anhand der bei mindestens zwei bei verschiedenen gemessenen Scherratenwerten bestimmten Viskositätsmesswerte ein die Viskosität des Fluids als Funktion der Scherrate wiedergebendes Viskositätsprofil erstellt. Sofern ausreichend viele bei in ausreichendem Maße voneinander verschiedenen gemessenen Scherratenwerten bestimmte Viskositätsmesswerte vorliegen, kann das Profil unmittelbar anhand der Viskositätsmesswerte und der zugehörigen gemessenen Scherratenwerten erstellt werden. Alternativ oder zusätzlich hierzu kann das Profil anhand einer mathematischen Funktion bestimmt werden, die die funktionale Abhängigkeit der Viskosität nicht-newtonscher Fluide von der Scherrate beschreibt. In dem Fall genügen bereits zwei bei unterschiedlichen Scherratenwerten bestimmte Viskositätsmesswerte, um ein aussagekräftiges Profil zu erstellen, über dass sich die Scherratenabhängigkeit der Viskosität des Fluids auch für Scherratenbereiche extrapolieren lässt, für die keine Viskositätsmesswerte bestimmt wurden.

Alternativ oder zusätzlich hierzu ist die Auswerteinheit 15 vorzugsweise derart ausgebildet, dass sie anhand der bei den unterschiedlichen Scherratenwerten bestimmten Viskositätsmesswerte oder dem daraus abgeleiteten Profil bestimmt, ob das Fluid ein newtonsches Fluid ist, dessen Viskosität im Wesentlichen unabhängig von der Scherrate ist, oder ein scherverdünnendes Fluid ist, dessen Viskosität mit zunehmender Scherrate abfällt, oder ein scherverdickendes Fluid ist, dessen Viskosität mit zunehmender Scherrate ansteigt.

Darüber hinaus können die mit der erfindungsgemäßen Vorrichtung gemessenen Viskositätsmesswerte auch dazu verwendet werden, während des fortlaufenden Messbetriebs auftretende Veränderungen der Viskosität des Fluids und/oder Abweichungen der Viskosität des Fluids von hierfür geltenden Vorgaben zu detektieren.

Genau wie die zuvor beschriebene Ermittlung zusätzlicher Informationen kann auch die Detektion dieser Veränderungen und/oder Abweichungen vom Betreiber der Einrichtung anhand der Viskositätsmesswerte ermittelt werden. Alternativ kann diese Detektion aber auch von einer an die Vorrichtung angeschlossenen oder in der Vorrichtung integrierten Detektionseinrichtung 21 detektiert und entsprechend angezeigt oder auf andere Weise ausgegeben werden. Die Funktion der Detektionseinrichtung 21 kann z.B. von einem mit entsprechender Software ausgestatteten PC, einem Mikroprozessor o.ä. ausgeführt werden. Alternativ kann die Detektionseinrichtung 21 - wie hier dargestellt - als Bestandteil der Auswerteinheit 15 ausgebildet sein.

Die Detektion erfolgt vorzugsweise derart, dass die Vorrichtung zu aufeinander folgende Zeiten Viskositätsmessungen durchführt, bei denen jeweils mindestens zwei Viskositätsmesswerte und die zugehörigen verschiedenen Scherratenwerte bestimmt werden. Im Anschluss werden die bei den Scherratenwerten bestimmten Viskositätsmesswerte mit in einem der Detektionseinheit 21 zugeordneten Speicher 23 abgelegten Referenzwerten verglichen.

Die Referenzwerte können zum Beispiel für das Fluid vorgegebene Sollwerte oder Sollwertbereiche umfassen, die die Viskosität des Fluids bei bestimmten Scherraten aufweisen soll. In dem Fall detektiert die Detektionseinrichtung 21 eine Abweichung von den durch die Sollwerte definierten Vorgaben, wenn mindestens einer der Viskositätsmesswerte vom zugehörigen Sollwert bzw. vom zugehörigen Sollwertbereich um mehr als eine vorgegebene Toleranz abweicht. Als vorgegebene Toleranz kann beispielsweise eine in Abhängigkeit von der Messgenauigkeit der Viskositätsmessungen vorgegebene Toleranz oder aber eine auf andere Weise bestimmte Toleranz, wie z.B. eine vom Benutzer vorgegebene Toleranz, angesetzt werden. Alternativ oder zusätzlich hierzu kann der Vergleich natürlich auch anhand eines anhand der gemessenen Viskositätsmesswerte und der zugehörigen Scherratenwerte erstellten Viskositätsprofils vorgenommen werden. Letzteres ermöglicht die Detektion von Abweichungen auch dann, wenn die Sollwerte bzw. die Sollwertbereiche nur für Scherraten oder Scherratenbereiche bekannt sind, die von den Scherratenwerten, bei denen die Viskositäts-messwerte bestimmt wurden, verschieden sind.

Alternativ oder zusätzlich hierzu können die Referenzwerte während einer oder mehreren zu früheren Zeiten von der Vorrichtung ausgeführten Messungen bei gemessenen Scherratenwerten bestimmte Viskositätsmesswerte umfassen. In dem Fall detektiert die Detektionseinrichtung 21 eine zeitliche Veränderung der Viskosität des Fluids, wenn mindestens einer der aktuellen Viskositäts-messwerte vom zugehörigen zu einem früheren Zeitpunkt gemessenen und im Speicher 23 abgelegten Referenzwert um mehr als eine von der Messgenauigkeit der Viskositätsmessungen abhängige Toleranz oder eine vom Benutzer vorgegebene Toleranz abweicht.

Die zusätzlichen Informationen sowie die Detektion von Abweichungen und/oder Veränderungen der Viskosität des Fluids sind insb. dann Vorteil, wenn die erfindungsgemäße Vorrichtung zugleich auch zur Messung weiterer Messgrößen, wie z.B. dem Massendurchfluss und/oder der Dichte eingesetzt wird und/oder die durch sie bestimmten Viskositätsmesswerte zur Kompensation von viskositätsabhängigen Messfehlern von Dichte und/oder Massendurchflussmessungen verwendet werden.

Wird ein vom Fluid durchströmter Rohrabschnitt 4, 7 einer erfindungsgemäßen Vorrichtung mittels der Erregereinrichtung 3 zu Schwingungen angeregt, so entstehen in dem vom Fluid durchströmten zu Schwingungen angeregten Rohrabschnitt 4, 7 Corioliskräfte, die sich auf die resultierende Schwingungsform des Rohrabschnitts 4, 7 auswirken. Das führt bei den hier dargestellten Ausführungsbeispielen dazu, dass die mit den einlass- und auslassseitig am jeweiligen Rohrabschnitt 4, 7 vorgesehenen Sensoren S erfassten Schwingungen übereinstimmende, der resultierenden Schwingungsform entsprechende Frequenzen aufweisen, die gegen einander um eine vom Massendurchfluss abhängige Phasenverschiebung phasenverschoben sind. Diese Phasenverschiebung kann somit z.B. mittels einer an die entsprechenden Sensoren S angeschlossenen Messeinheit 25 bestimmt werden, die dann anhand der gemessenen Phasenverschiebung den Massendurchflusses bestimmt. Alternativ oder zusätzlich hierzu kann die Vorrichtung zur Dichte-Messung eingesetzt werden. In dem Fall wird mindestens ein Rohrabschnitt 4, 7 des Messsystems 1 mittels der Erregereinrichtung 3 und der Regeleinrichtung 11 zu Schwingungen bei einer Resonanzfrequenz angeregt. Dabei wird die von der Dichte abhängige Resonanzfrequenz mittels der an die Schwingungssensoren S angeschlossenen Messeinheit 25 ermittelt und hieraus die Dichte des Fluids bestimmt. Wird die Messeinrichtung auch als Dichte-Messeinrichtung betrieben, so bietet das den Vorteil, dass die den dynamischen Viskositäten entsprechenden Viskositätsmesswerte anhand der gemessenen Dichte in der zugehörigen kinematischen Viskosität entsprechende Viskositätsmesswerte umgerechnet werden können. Zugleich können Dichte- und Viskositätsmessungen dazu verwendet werden einen dichteabhängigen Messfehler der Viskositätsmesswerte und/oder viskositätsabhängige Messfehler der gemessenen Dichten zu korrigieren.

**Bezugszeichenliste**

| 1 | Messsystem | 15 | Auswerteeinheit |
|---|---|---|---|
| 3 | Erregereinrichtung | 17 | Speicher |
| 4 | Rohrabschnitt | 19 | Ausgabeeinheit |
| 5 | Messrohr | 21 | Detektionseinrichtung |
| 7 | Rohrabschnitt | 23 | Speicher |
| 9 | Messeinrichtung | 25 | Messeinheit |
| 11 | Regeleinrichtung | | |
| 13 | Energiebedarfsmesseinrichtung | | |

**Patentansprüche**

1. Vorrichtung zur Messung von Viskositäten von Fluiden, die eine komplexe Viskosität aufweisen, die einen auf elastische und einen auf viskose Eigenschaften zurückzuführenden Beitrag umfasst, und deren auf viskose Eigenschaften zurückzuführender Beitrag groß ist im Vergleich zu deren auf elastische Eigenschaften zurückzuführenden Beitrag, mit

- einem Messsystem (1) mit mindestens einem im Messbetrieb mit einem Fluid befüllten oder vom Fluid durchströmten Messrohr (5), das mindestens einen zu Schwingungen anregbaren Rohrabschnitt (4, 7) aufweist,
- einer Erregereinrichtung (1) zur Anregung von mindestens zwei Nutzschwingungsmoden unterschiedlicher Frequenz, bei denen jeweils mindestens einer der Rohrabschnitte (4, 7) zu Schwingungen, insb. zu Resonanzschwingungen, der jeweiligen Nutzschwingungsmode angeregt wird,
- einer Messeinrichtung (3), die derart ausgebildet ist, dass sie für jeden der mindestens zwei im Messbetrieb angeregten Nutzschwingungsmoden jeweils eine Frequenz und eine Dämpfung der resultierenden Schwingung mindestens eines zu Schwingungen der jeweiligen Nutzschwingungsmode angeregten Rohrabschnitts (4, 7) bestimmt,
- wobei ein Rohrradius und eine bei der Anregung der jeweiligen Nutzschwingungsmode ausgelenkte Länge oder Teillänge jedes Rohrabschnitts (4, 7) jeweils derart bemessen sind, dass die Frequenzen und die Dämpfungen der bei der Anregung der einzelnen Nutzschwingungsmoden resultierenden Schwingungen jeweils keine Abhängigkeit von der Amplitude der resultierenden Schwingung aufweisen, und
- wobei der zu Nutzschwingungen anregbare Rohrabschnitt (4) oder die zu Nutzschwingungen anregbaren Rohrabschnitte (4, 7) jeweils einen Rohrradius aufweisen, der größer gleich einem Zehnfachen der Eindringtiefe (h) ist, bis zu der sich bei der Anregung des jeweiligen Rohrabschnitts (4, 7) zu Schwingungen der jeweiligen Nutzschwingungsmode im Fluid ausbildende Scherwellen ausgehend von einer Rohrwand des jeweiligen Rohrabschnitts (4, 7) in das Fluid eindringen, und
- einer Auswerteeinrichtung (15), die derart ausgebildet ist, dass sie anhand von in einem Speicher (17) abgelegten Kalibrationsdaten für jede der mindestens zwei im Messbetrieb angeregten Nutzschwingungsmoden jeweils anhand der bei deren Anregung bestimmten Dämpfung der resultierenden Schwingung des jeweiligen Rohrabschnitts (4, 7) einen Viskositätsmesswert und anhand der Frequenz der resultierenden Schwingung des jeweiligen Rohrabschnitts (4, 7) einen Scherratenwert bestimmt, wobei der Viskositätsmesswert der dynamischen Viskosität des Fluids bei einer dem Scherratenwert entsprechenden statischen Scherrate entspricht.

2. Vorrichtung gemäß Anspruch 1, bei der die Auswerteeinrichtung (15) derart ausgebildet ist, dass sie anhand von mindestens zwei bei verschiedenen Scherratenwerten bestimmten Viskositätsmesswerten

- ein die Viskosität des Fluids als Funktion der Scherrate wiedergebendes Viskositätsprofil erstellt,
- erkennt, ob die Viskosität des Fluids eine Scherratenabhängigkeit aufweist, und/oder
- anhand der bei den unterschiedlichen Scherratenwerten bestimmten Viskositätsmesswerte bestimmt, ob das Fluid ein newtonsches Fluid ist, dessen Viskosität im Wesentlichen unabhängig von der Scherrate ist, oder ein scherverdünnendes Fluid ist, dessen Viskosität mit zunehmender Scherrate abfällt, oder ein scherverdickendes Fluid ist, dessen Viskosität mit zunehmender Scherrate ansteigt.

3. Vorrichtung gemäß Anspruch 1 bis 2, mit einer Detektionseinrichtung (21) zur Detektion von während des Messbetriebs auftretenden Veränderungen des Fluids und/oder Abweichungen der Viskosität des Fluids von hierfür geltenden Vorgaben, die derart ausgebildet ist, dass

- sie die bei den gemessenen Scherratenwerten bestimmten Viskositätsmesswerte oder anhand des Viskositätsprofils bestimmte Viskositätsmesswerte mit Referenzwerten, insb. in einem Speicher (23) abgelegten vorgegebenen Sollwerten oder vorgegebenen Sollwertbereichen und/oder in einem Speicher (23) abgelegten zu einem oder mehreren früheren Zeitpunkten bei von der Vorrichtung bestimmten Scherratenwerten bestimmten Viskositätsmesswerten, vergleicht, und
- eine Veränderung und/oder Abweichung detektiert, wenn mindestens einer der Viskositätsmesswerte vom zugehörigen Referenzwert um mehr als eine vorgegebene Toleranz, insb. eine in Abhängigkeit von der Messgenauigkeit der Viskositätsmessung vorgegebene Toleranz oder eine vom Benutzer vorgegebene Toleranz, abweicht.

4. Vorrichtung gemäß Anspruch 1 bis 3, bei der

- die Erregereinrichtung (3) eine Regeleinrichtung (11) umfasst, die die Amplituden der bei der Anregung der einzelnen Nutzschwingungsmoden resultierenden Schwingungen jeweils auf einen konstanten Wert regelt, und
- die Messeinrichtung (3) derart ausgebildet ist, dass sie die Dämpfungen jeweils anhand eines mittels einer Energiebedarfsmesseinrichtung (13) ermittelten Maßes für einen bei der Anregung der jeweiligen Nutzschwingungsmode zur Aufrechterhaltung der resultierenden Schwingungen konstanter Amplitude erforderlichen Energiebedarfs bestimmt.

5. Vorrichtung gemäß Anspruch 1 bis 4, bei der die Kalibrationsdaten für jede Nutzschwingungsmode in einem vorgeschalteten Kalibrationsverfahren ermittelte Daten umfassen, über die den im Messbetrieb bei der Anregung der Nutzschwingungsmode gemessenen Dämpfungen ein Viskositätsmesswert zugeordnet ist und den gemessenen Frequenzen jeweils ein Scherratenwert zugeordnet ist, der im Wesentlichen gleich einem $2\pi$-fachen der Frequenz der resultierenden Schwingung des jeweiligen Rohrabschnitts (4, 7) ist.

6. Vorrichtung gemäß Anspruch 1 bis 5, mit einer an die Messeinrichtung (9) angeschlossenen Messeinheit (25), die derart ausgestaltet ist, dass sie im Messbetrieb anhand der bei Anregung mindestens einer der Nutzschwingungsmoden resultierenden Schwingung einen Massendurchfluss und/oder eine Dichte des Fluids bestimmt.

7. Vorrichtung gemäß Anspruch 1 bis 6, bei der die Nutzschwingungsmoden Frequenzen von kleiner gleich 1600 Hz, insb. kleiner gleich 1000 kHz, insb. kleiner gleich 800 Hz, insb. von 100 Hz bis 800 Hz, aufweisen.

8. Verfahren zur Messung von Viskositäten eines Fluids, das eine komplexe Viskosität aufweist, die einen auf elastische und einen auf viskose Eigenschaften zurückzuführenden Beitrag umfasst, und deren auf viskose Eigenschaften zurückzuführender Beitrag groß ist im Vergleich zu deren auf elastische Eigenschaften zurückzuführenden Beitrag, bei dem für mindestens zwei Nutzschwingungsmoden unterschiedlicher Frequenz jeweils Messungen ausgeführt werden, bei denen

- jeweils mindestens ein Rohrabschnitt (4, 7) mindestens eines mit einem Fluid befüllten und/oder vom Fluid durchströmten Messrohrs (5) eines Messsystems (1) mittels einer Erregereinrichtung (3) zu Schwingungen, insb. zu Resonanzschwingungen, der jeweiligen Nutzschwingungsmode angeregt wird,
- eine Frequenz und eine Dämpfung der resultierenden Schwingung mindestens eines zu Schwingungen der jeweiligen Nutzschwingungsmode angeregten Rohrabschnitts (4, 7) bestimmt wird,
- wobei ein Rohrradius und eine bei der Anregung der jeweiligen Nutzschwingungsmode ausgelenkte Länge oder Teillänge jedes Rohrabschnitts (4, 7) jeweils derart bemessen sind, dass die Frequenzen und die Dämpfungen der bei der Anregung der einzelnen Nutzschwingungsmoden resultierenden Schwingungen jeweils keine Abhängigkeit von der Amplitude der resultierenden Schwingung aufweisen, und
- wobei der zu Nutzschwingungen anregbare Rohrabschnitt (4) oder die zu Nutzschwingungen anregbaren Rohrabschnitte (4, 7) jeweils einen Rohrradius aufweisen, der größer gleich einem Zehnfachen der Eindringtiefe (h) ist, bis zu der sich bei der Anregung des jeweiligen Rohrabschnitts (4, 7) zu Schwingungen der jeweiligen Nutzschwingungsmode im Fluid ausbildende Scherwellen ausgehend von einer Rohrwand des jeweiligen Rohrabschnitts (4, 7) in das Fluid eindringen, und
- anhand von in einem Kalibrationsverfahren bestimmten Kalibrationsdaten für jede der mindestens zwei angeregten Nutzschwingungsmoden jeweils anhand der bei deren Anregung bestimmten Dämpfung der resultierenden Schwingung des jeweiligen Rohrabschnitts (4, 7) einen Viskositätsmesswert und anhand der Frequenz der resultierenden Schwingung des jeweiligen Rohrabschnitts (4, 7) einen Scherratenwert bestimmt wird, wobei der Viskositätsmesswert der dynamischen Viskosität des Fluids bei einer dem Scherratenwert entsprechenden statischen Scherrate entspricht.

9. Verfahren gemäß Anspruch 8, bei dem die Nutzschwingungsmoden Frequenzen von kleiner gleich 1600 Hz, insb. kleiner gleich 1000 kHz, insb. kleiner gleich 800 Hz, insb. von 100 Hz bis 800 Hz, aufweisen.

10. Verfahren gemäß Anspruch 8 bis 9, bei dem

- in dem Kalibrationverfahren für jede der einzelnen Nutzschwingungsmoden Referenzmessungen ausgeführt werden, bei denen jeweils die jeweilige Nutzschwingungsmode angeregt wird während der entsprechende Rohrabschnitt (4, 7) mit dem ein Referenzfluid befüllt und/oder von dem Referenzfluid durchströmt ist und die Dämpfung und die Frequenz der bei der Anregung der jeweiligen Nutzschwingungsmode resultierenden Schwingung gemessen werden,
- wobei die Referenzmessungen mit newtonschen Referenzfluiden verschiedener bekannter dynamischer Viskosität ausgeführte Referenzmessungen umfassen, und
- wobei den gemessenen Frequenzen jeweils ein Scherratenwert zugeordnet wird, der im Wesentlichen gleich einem $2\pi$-fachen der Frequenz der resultierenden Schwingung des jeweiligen Rohrabschnitts (4, 7) ist und/oder die Referenzmessungen mit nicht-newtonschen Referenzfluiden mit in bekannter Weise von der Scherrate abhängiger Viskosität ausgeführte Referenzmessungen umfassen,
- wobei die Referenzmessungen insb. mit Referenzfluiden mit im Verhältnis zu deren viskosen Eigenschaften unterschiedlich stark ausgeprägten elastischen Eigenschaften ausgeführte Referenzmessungen umfassen, und
- für jede Nutzschwingungsmode Kalibrationsdaten bestimmt werden, über die den im Messbetrieb bei der Anregung der jeweiligen Nutzschwingungsmode gemessenen Dämpfungen und Frequenzen ein Scherratenwert und ein Viskositätsmesswert zugeordnet ist.

**11.** Verfahren gemäß Anspruch 8 bis 10, bei dem anhand von mindestens zwei bei verschiedenen Scherratenwerten bestimmten Viskositätsmesswerten

- ein die Viskosität des Fluids als Funktion der Scherrate wiedergebendes Viskositätsprofil erstellt wird,
- erkannt wird, ob die Viskosität des Fluids eine Scherratenabhängigkeit aufweist, und/oder
- anhand der bei den Scherratenwerten bestimmten Viskositätsmesswerten bestimmt wird, ob das Fluid ein newtonsches Fluid, ein scherverdünnendes Fluid oder ein scherverdickendes Fluid ist.

**12.** Verfahren gemäß Anspruch 8 bis 11, bei dem während des Messbetriebs auftretende Veränderungen des Fluids und/oder Abweichungen der Viskosität des Fluids von hierfür geltenden Vorgaben detektiert werden, indem

- die bei den gemessenen Scherratenwerten bestimmten Viskositätsmesswerte mit Referenzwerten, insb. mit vorgegebenen Sollwerten, mit vorgegebenen Sollwertbereichen oder mit zu einem oder mehreren früheren Zeitpunkten bei gemessenen Scherratenwerten bestimmten Viskositätsmesswerten, verglichen werden, und
- eine Veränderung und/oder Abweichung detektiert wird, wenn mindestens einer der Viskositätsmesswerte vom zugehörigen Referenzwert um mehr als eine vorgegebene Toleranz, insb. eine in Abhängigkeit von der Messgenauigkeit der Viskositätsmessung vorgegebene Toleranz oder eine vom Benutzer vorgegebene Toleranz, abweicht.

## Claims

**1.** A device for measuring viscosities of fluids with a complex viscosity, which comprises one part attributable to elastic properties and one part attributable to viscous properties, and with its part attributable to viscous properties being large compared to its part attributable to elastic properties, with

- a measuring system (1) with at least one measuring tube (5) filled with a fluid or with a fluid flowing through it in measuring mode, which has at least one tube section (4, 7) which can be caused to oscillate,
- an excitation device (1) for initiating at least two useful oscillation modes with different frequencies, in which at least one of the tube sections (4, 7) is in each case caused to oscillate, in particular to perform resonant oscillations, in the respective useful oscillation mode,
- a measuring device (3), which is configured to determine, for each of the at least two useful oscillation modes initiated in measuring mode, a frequency and a damping of the resultant oscillation of at least one tube section (4, 7) which is caused to oscillate in the respective useful oscillation mode,
- wherein a tube radius and a length or partial length of each tube section (4, 7) deflected when the respective useful oscillation mode is initiated are dimensioned in such a way that the frequencies and the dampings of the oscillations which result when the individual useful oscillation modes are initiated do not have a dependency on the amplitude of the resultant oscillation, and
- wherein the tube section (4) which can be caused to perform useful oscillations or the tube sections (4, 7) which can be caused to perform useful oscillations each have a tube radius greater than or equal to ten times the penetration depth (h) to which shear waves formed in the fluid originating from a tube wall of the respective tube section (4, 7) penetrate into the fluid when the respective tube section (4, 7) is caused to oscillate in the respective useful oscillation mode, and
- a deflection device (15) which is configured in such a way that it determines a viscosity measured value based on calibration data saved in a storage device (17) for each of the at least two useful oscillation modes initiated in measuring mode based on the damping of the resultant oscillation of the respective tube section (4, 7) determined upon their excitation and a shear rate value based on the frequency of the resultant oscillation of the respective tube section (4, 7), wherein the viscosity measured value of the dynamic viscosity of the fluid corresponds to a static shear rate corresponding to the shear rate value.

2. The device as claimed in claim 1, in which the evaluation device (15) is configured in such a way that, based on at least two viscosity measured values determined at different shear rate values,

- it creates a viscosity profile reflecting the viscosity of the fluid as a function of the shear rate,
- it detects whether the viscosity of the fluid is dependent on the shear rate, and/or
- it determines, based on the viscosity measured values determined at the different shear rate values, whether the fluid is a Newtonian fluid, the viscosity of which is essentially independent of the shear rate, or a shear-thinning fluid, the viscosity of which decreases as the shear rate rises, or a shear-thickening fluid, the viscosity of which increases as the shear rate rises.

3. The device as claimed in claims 1 and 2, with a detection device (21) for detecting changes in the fluid and/or deviations in the viscosity of the fluid from specifications applicable to this during measuring mode, which is configured in such a way that

- it compares the viscosity measured values determined at the measured shear rate values or viscosity measured values determined based on the viscosity profile with reference values, in particular with specified target values saved in a storage device (23) or with specified target value ranges and/or with viscosity measured values saved in a storage device (23) determined at one or more earlier time points at shear rate values determined by the device, and
- a change and/or deviation is/are detected if at least one of the viscosity measured values deviates from the corresponding reference value by more than a specified tolerance, in particular a tolerance specified as a function of the measurement accuracy of the viscosity measurement or a tolerance specified by the user.

4. The device as claimed in claims 1 to 3, in which

- the excitation device (3) comprises a control device (11), which regulates each amplitude of the oscillations which result when the individual useful oscillation modes are initiated to a constant value, and
- the measuring device (3) is configured in such a way that it determines dampings in each case based on a value determined using an energy requirement measuring device (13) for an energy requirement necessary for a constant amplitude for maintaining the resultant oscillations when the respective useful oscillation mode is initiated.

5. The device as claimed in claims 1 to 4, in which the calibration data determined for each useful oscillation mode comprises data determined during an upstream calibration process, which is used to assign a viscosity measured value to the dampings measured in measuring mode when the useful oscillation mode is initiated and to assign a shear rate value to each measured frequency, which is essentially equal to $2\pi$ the frequency of the resultant oscillation of the respective tube section (4, 7).

6. The device as claimed in claims 1 to 5, with a measuring unit (25) connected to the measuring device (9), which is configured in such a way that it determines a mass flow and/or a density of the fluid in measuring mode based on the oscillation which results when at least one of the useful oscillation modes is initiated.

7. The device as claimed in claims 1 to 6, in which the useful oscillation modes have frequencies of less than or equal to 1600 Hz, in particular less than or equal to 1000 kHz, in particular less than or equal to 800 Hz, in particular from 100 Hz to 800 Hz.

8. A method for measuring viscosities of a fluid with a complex viscosity, which comprises one part attributable to elastic properties and one part attributable to viscous properties, and with its part attributable to viscous properties being large compared to its part attributable to elastic properties, in which measurements are carried out for at least two useful oscillation modes of a different frequency, in which

- in each case at least one tube section (4, 7) of at least one measuring tube (5) of a measuring system (1) filled with a fluid and/or with fluid flowing through it is caused to oscillate using an excitation device (3), in particular to perform resonant oscillations, in the respective useful oscillation mode,
- a frequency and a damping of the resultant oscillation of at least one tube section (4, 7) caused to oscillate in the respective useful oscillation mode are determined,
- wherein a tube radius and a length or partial length of each tube section (4, 7) deflected when the respective useful oscillation mode is initiated are dimensioned in such a way that the frequencies and the dampings of the oscillations which result when the individual useful oscillation modes are initiated do not have a dependency on the amplitude of the resultant oscillation, and

- wherein the tube section (4) which can be caused to perform useful oscillations or the tube sections (4, 7) which can be caused to perform useful oscillations each have a tube radius greater than or equal to ten times the penetration depth (h) to which shear waves formed in the fluid originating from a tube wall of the respective tube section (4, 7) penetrate into the fluid when the respective tube section (4, 7) is caused to oscillate in the respective useful oscillation mode, and

- a viscosity measured value is determined based on calibration data determined during a calibration process for each of the at least two initiated useful oscillation modes based on the damping of the resultant oscillation of the respective tube section (4, 7) determined upon their excitation and a shear rate value based on the frequency of the resultant oscillation of the respective tube section (4, 7), wherein the viscosity measured value of the dynamic viscosity of the fluid corresponds to a static shear rate corresponding to the shear rate value.

9. The method as claimed in claim 8, in which the useful oscillation modes have frequencies less than or equal to 1600 Hz, in particular less than or equal to 1000 kHz, in particular less than or equal to 800 Hz, in particular from 100 Hz to 800 Hz.

10. The method as claimed in claims 8 and 9, in which

- reference measurements are performed for each of the individual useful oscillation modes during the calibration process, in which the respective useful oscillation mode is initiated while the corresponding tube section (4, 7) is filled with the one reference fluid and/or has the reference fluid flow through it, and the damping and the frequency of the oscillation which results when the respective useful oscillation mode is initiated are measured,

- wherein the reference measurements comprise reference measurements performed with Newtonian reference fluids with a varying known dynamic viscosity, and

- wherein each of the measured frequencies is assigned a shear rate value, which is essentially equal to $2\pi$ the frequency of the resultant oscillation of the respective tube section (4, 7) and/or the reference measurements comprise reference measurements performed with non-Newtonian reference fluids with a viscosity that is dependent in a known way on the shear rate,

- wherein the reference measurements comprise reference measurements performed in particular using reference fluids with elastic properties which vary greatly relative to their viscous properties, and

- for each useful oscillation mode calibration data is determined which is used to assign a shear rate value and a viscosity measured value to the dampings and frequencies measured in measuring mode when the respective useful oscillation mode is initiated.

11. The method as claimed in claims 8 to 10, in which, based on at least two viscosity measured values determined at different shear rate values,

- a viscosity profile reflecting the viscosity of the fluid as a function of the shear rate is created,

- it is detected whether the viscosity of the fluid is dependent on the shear rate, and/or,

- based on the viscosity measured values determined at the shear rate values, it is determined whether the fluid is a Newtonian fluid, a shear-thinning fluid or a shear-thickening fluid.

12. The method as claimed in claims 8 to 11, in which changes to the fluid and/or deviations in the viscosity of the fluid from specifications applicable to this during measuring mode are detected by

- comparing the viscosity measured values determined at the measured shear rate values with reference values, in particular with specified target values, with specified target value ranges or with viscosity measured values determined at measured shear rate values at one or more earlier time points, and

- detecting a change and/or deviation if at least one of the viscosity measured values deviates from the corresponding reference value by more than a specified tolerance, in particular a tolerance specified as a function of the measurement accuracy of the viscosity measurement or a tolerance specified by the user.

**Revendications**

1. Dispositif destiné à la mesure de viscosités de fluides présentant une viscosité complexe, laquelle viscosité comprend une contribution due à des propriétés élastiques et une contribution due à des propriétés visqueuses, et dont la contribution due à des propriétés visqueuses est importante par rapport à la contribution due à des propriétés élastiques, lequel dispositif comprend

- un système de mesure (1) avec au moins un tube de mesure (5) rempli d'un fluide ou traversé par le fluide en mode de mesure, lequel tube présente au moins une section de tube (4, 7) pouvant être excitée en vibrations,
- un dispositif d'excitation (1) destiné à exciter au moins deux modes de vibration utiles de fréquences différentes, modes dans lesquels au moins l'une des sections de tube (4, 7) est excitée en vibrations, notamment des vibrations de résonance, du mode de vibration utile respectif,
- un dispositif de mesure (3), lequel est conçu de telle sorte à déterminer, pour chacun des au moins deux modes de vibration utiles excités en mode de mesure, une fréquence et un amortissement de la vibration résultante d'au moins une section de tube (4, 7) excitée en vibrations selon le mode de vibration utile respectif,
- un rayon de tube et une longueur ou une longueur partielle de chaque section de tube (4, 7) déviée lors de l'excitation du mode de vibration utile respectif étant respectivement dimensionnés de telle sorte que les fréquences et les amortissements des vibrations résultant de l'excitation des différents modes de vibration utiles ne présentent respectivement aucune dépendance par rapport à l'amplitude de la vibration résultante, et
- la section de tube (4) pouvant être excitée en vibrations utiles ou les sections de tube (4, 7) pouvant être excitées en vibrations utiles présentant chacune un rayon de tube qui est supérieur ou égal à dix fois la profondeur de pénétration (h) jusqu'à laquelle - lors de l'excitation de la section de tube respective (4, 7) en vibrations du mode de vibration utile respectif - les ondes de cisaillement se formant dans le fluide pénètrent dans le fluide à partir d'une paroi de la section tubulaire respective (4, 7), et
- un dispositif d'évaluation (15), lequel est conçu de telle sorte à déterminer, à partir des données d'étalonnage enregistrées dans une mémoire (17) pour chacun des au moins deux modes de vibration utiles excités en mode de mesure, respectivement une valeur mesurée de viscosité à partir de l'amortissement de la vibration résultante de la section de tube (4, 7) respective, lequel amortissement est déterminé lors de l'excitation desdits modes, et une valeur de taux de cisaillement à partir de la fréquence de la vibration résultante de la section de tube respective (4, 7), la valeur mesurée de viscosité correspondant à la viscosité dynamique du fluide à un taux de cisaillement statique qui correspond à la valeur de taux de cisaillement.

2. Dispositif selon la revendication 1, pour lequel le dispositif d'évaluation (15) est conçu de telle sorte qu'à partir d'au moins deux valeurs mesurées de viscosité déterminées à différentes valeurs de taux de cisaillement, ledit dispositif

- établit un profil de viscosité représentant la viscosité du fluide en fonction du taux de cisaillement,
- détecte si la viscosité du fluide présente une dépendance du taux de cisaillement et/ou
- détermine, à partir des valeurs mesurées de viscosité déterminées à différentes valeurs de taux de cisaillement, si le fluide est un fluide newtonien dont la viscosité est essentiellement indépendante du taux de cisaillement, ou si le fluide est un fluide présentant un comportement fluidifiant au cisaillement, auquel cas la viscosité du fluide diminue lorsque le taux de cisaillement augmente, ou si le fluide est un fluide présentant un comportement épaississant au cisaillement, auquel cas la viscosité du fluide augmente lorsque le taux de cisaillement augmente.

3. Dispositif selon les revendications 1 à 2 comprenant un dispositif de détection (21) destiné à détecter les modifications du fluide et/ou les écarts de viscosité du fluide par rapport aux spécifications applicables, modifications qui surviennent en mode de mesure, lequel dispositif est conçu de telle sorte à

- comparer les valeurs mesurées de viscosité déterminées aux valeurs de taux de cisaillement mesurées ou les valeurs mesurées de viscosité déterminées à partir du profil de viscosité avec des valeurs de référence, notamment des valeurs de consigne prédéfinies ou des gammes de valeurs de consigne prédéfinies enregistrées dans une mémoire (23) et/ou des valeurs mesurées de viscosité déterminées à un ou plusieurs moments antérieurs aux valeurs de taux de cisaillement déterminées par le dispositif et enregistrées dans une mémoire (23), et
- détecter une modification et/ou un écart lorsqu'au moins l'une des valeurs mesurées de viscosité s'écarte de la valeur de référence correspondante de plus d'une tolérance prédéfinie, notamment une tolérance prédéfinie en fonction de la précision de mesure de la viscosité ou une tolérance prédéfinie par l'utilisateur.

4. Dispositif selon les revendications 1 à 3, pour lequel

- le dispositif d'excitation (3) comprend un dispositif de régulation (11) qui régule les amplitudes des vibrations résultant de l'excitation des différents modes de vibration utiles à une valeur constante, et

- le dispositif de mesure (3) est conçu de telle sorte à déterminer les amortissements à l'aide d'une mesure déterminée au moyen d'un dispositif de mesure d'énergie (13) pour une énergie nécessaire au maintien des vibrations d'amplitude constante résultant de l'excitation du mode de vibration utile respectif.

5. Dispositif selon les revendications 1 à 4, pour lequel les données d'étalonnage pour chaque mode de vibration utile comprennent des données déterminées dans un processus d'étalonnage en amont, auxquelles données une valeur mesurée de viscosité est associée aux amortissements mesurés en mode de mesure lors de l'excitation du mode de vibration utile et auxquelles données une valeur de taux de cisaillement est associée aux fréquences mesurées, laquelle valeur est essentiellement égale à 2 $\pi$ fois la fréquence de la vibration résultante de la section de tube respective (4, 7).

6. Dispositif selon les revendications 1 à 5 comprenant une unité de mesure (25) raccordée au dispositif de mesure (9), laquelle unité est conçue de telle sorte à déterminer, en mode de mesure, un débit massique et/ou une densité du fluide à partir de la vibration résultante lors de l'excitation d'au moins l'un des modes de vibration utiles.

7. Dispositif selon les revendications 1 à 6, pour lequel les modes de vibration utiles présentent des fréquences inférieures ou égales à 1 600 Hz, notamment inférieures ou égales à 1 000 kHz, notamment inférieures ou égales à 800 Hz, notamment comprises entre 100 Hz et 800 Hz.

8. Procédé destiné à la mesure de viscosités d'un fluide, lequel fluide présente une viscosité complexe, laquelle viscosité comprend une contribution due à des propriétés élastiques et une contribution due à des propriétés visqueuses, et dont la contribution due à des propriétés visqueuses est importante par rapport à la contribution due à des propriétés élastiques, procédé pour lequel des mesures sont effectuées respectivement pour au moins deux modes de vibration utiles de fréquences différentes, mesures pour lesquelles

- au moins une section de tube (4, 7) d'au moins un tube de mesure (5) d'un système de mesure (1) rempli d'un fluide et/ou traversé par le fluide est excitée au moyen d'un dispositif d'excitation (3) pour produire des vibrations, notamment des vibrations de résonance, du mode de vibration utile respectif,
- une fréquence et un amortissement de la vibration résultante d'au moins une section de tube (4, 7) excité en vibrations du mode de vibration utile respectif sont déterminés,
- un rayon de tube et une longueur ou une longueur partielle déviée lors de l'excitation du mode de vibration utile respectif de chaque section de tube (4, 7) étant respectivement dimensionnés de telle sorte que les fréquences et les amortissements des vibrations résultant de l'excitation des différents modes de vibration utiles ne présentent respectivement aucune dépendance par rapport à l'amplitude de la vibration résultante, et
- la section de tube (4) pouvant être excitée en vibrations utiles ou les sections de tube (4, 7) pouvant être excitées en vibrations utiles présentant chacune un rayon de tube qui est supérieur ou égal à dix fois la profondeur de pénétration (h) jusqu'à laquelle - lors de l'excitation de la section de tube respective (4, 7) en vibrations du mode de vibration utile respectif - les ondes de cisaillement se formant dans le fluide pénètrent dans le fluide à partir d'une paroi de la section tubulaire respective (4, 7), et
- une valeur mesurée de viscosité étant déterminée - à l'aide de données d'étalonnage déterminées dans un procédé d'étalonnage - pour chacun des au moins deux modes de vibration utiles excités, respectivement à l'aide de l'amortissement de la vibration résultante de la section de tube respective (4, 7), lequel amortissement est déterminé lors de l'excitation desdits modes et, une valeur de taux de cisaillement étant déterminée à l'aide de la fréquence de la vibration résultante de la section de tube respective (4, 7), la valeur mesurée de viscosité correspondant à la viscosité dynamique du fluide à un taux de cisaillement statique qui correspond à la valeur du taux de cisaillement.

9. Procédé selon la revendication 8, pour lequel les modes de vibration utiles présentent des fréquences inférieures ou égales à 1 600 Hz, notamment inférieures ou égales à 1 000 kHz, notamment inférieures ou égales à 800 Hz, notamment comprises entre 100 Hz et 800 Hz.

10. Procédé selon les revendications 8 à 9, pour lequel

- dans le procédé d'étalonnage, des mesures de référence sont effectuées pour chacun des modes de vibration utiles individuels, mesures pour lesquelles le mode de vibration utile respectif est excité pendant que la section de tube correspondante (4, 7) est remplie d'un fluide de référence et/ou est traversée par le fluide de référence, et l'amortissement et la fréquence de la vibration résultante sont mesurés lors de l'excitation du mode de vibration utile respectif,

- les mesures de référence comprenant des mesures de référence effectuées avec des fluides de référence newtoniens de différentes viscosités dynamiques connues, et

- une valeur de taux de cisaillement étant attribuée à chacune des fréquences mesurées, laquelle valeur est sensiblement égale à $2\pi$ fois la fréquence de la vibration résultante de la section de tube respective (4, 7) et/ou les mesures de référence comprenant des mesures de référence effectuées avec des fluides de référence non newtoniens dont la viscosité dépend de manière connue du taux de cisaillement,

- les mesures de référence comprenant notamment des mesures de référence effectuées avec des fluides de référence présentant des propriétés élastiques plus ou moins prononcées par rapport à leurs propriétés visqueuses, et

- pour chaque mode de vibration utile, des données d'étalonnage sont déterminées, auxquelles sont associées une valeur de taux de cisaillement et une valeur de viscosité mesurée à partir des amortissements et des fréquences mesurés en mode de mesure lors de l'excitation du mode de vibration utile correspondant.

11. Procédé selon les revendications 8 à 10, pour lequel, à partir d'au moins deux valeurs mesurées de viscosité déterminées à différentes valeurs de taux de cisaillement

- un profil de viscosité représentant la viscosité du fluide en fonction du taux de cisaillement est établi,
- on détermine si la viscosité du fluide présente une dépendance vis-à-vis du taux de cisaillement, et/ou
- on détermine, à partir des valeurs mesurées de viscosité pour les valeurs de taux de cisaillement, si le fluide est un fluide newtonien, si le fluide présente un comportement fluidifiant au cisaillement ou si le fluide présente un comportement épaississant au cisaillement.

12. Procédé selon les revendications 8 à 11, pour lequel les modifications du fluide et/ou les écarts de viscosité du fluide par rapport aux spécifications applicables qui surviennent en mode de mesure sont détectés en ce que

- les valeurs de viscosité déterminées aux valeurs de taux de cisaillement mesurées sont comparées à des valeurs de référence, notamment à des valeurs de consigne prédéfinies, à des gammes de valeurs de consigne prédéfinies ou à des valeurs mesurées de viscosité déterminées à un ou plusieurs moments antérieurs aux valeurs de taux de cisaillement mesurées, et
- une modification et/ou un écart est détecté lorsqu'au moins l'une des valeurs mesurées de viscosité s'écarte de la valeur de référence correspondante de plus d'une tolérance prédéfinie, notamment une tolérance prédéfinie en fonction de la précision de mesure de la viscosité ou une tolérance prédéfinie par l'utilisateur.

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1158289 B1
- DE 102004021690 A1
- US 20080184813 A1
- US 20040255648 A1